# EUROPÄISCHE PATENTSCHRIFT

(11) **EP 3 297 745 B1**
(45) Veröffentlichungstag und Bekanntmachung des Hinweises auf die Patenterteilung: **01.07.2020**
(21) Anmeldenummer: 16722240.5
(22) Anmeldetag: 13.05.2016
(51) Int. Cl.: B01D 46/00, B01D 46/10, B01D 46/52

(54) **FILTERELEMENT, INSBESONDERE ZUR GASFILTRATION**
FILTER ELEMENT, IN PARTICULAR FOR GAS FILTRATION
ÉLÉMENT FILTRANT, EN PARTICULIER POUR LA FILTRATION DE GAZ

(30) Priorität: 22.05.2015 DE 102015006496
(43) Veröffentlichungstag der Anmeldung: 28.03.2018
(73) Patentinhaber: Mann+Hummel GmbH, 71636 Ludwigsburg (DE)
(72) Erfinder: SCHMID, Daniel, 74343 Sachsenheim (DE); POLJAK, Ivanka, 41720 Göteborg (SE); LAUNER, Ulrich, 70469 Stuttgart (DE); SIEGELE, Thomas, 71726 Benningen (DE)
(74) Vertreter: Seyboth, Matthias
(86) Internationale Anmeldenummer: PCT/EP2016/060816
(87) Internationale Veröffentlichungsnummer: WO 2016/188772

(56) Entgegenhaltungen:
- WO-A1-2013/139992
- DE-A1-102013 011 612
- DE-C1- 19 748 974
- DE-U1- 20 112 440

## Beschreibung

### Technisches Gebiet

Die Erfindung bezieht sich auf ein Filterelement, insbesondere zur Gasfiltration, nach dem Oberbegriff des Anspruches 1.

### Stand der Technik

In der EP 2 223 727 A1 wird ein Luftfilter zur Filtration der Ansaugluft für eine Brennkraftmaschine beschrieben, wobei der Luftfilter einen plattenförmigen Filtermediumkörper aufweist, dessen gegenüberliegende Außenseiten die Roh- und die Reinseite bilden. An der Reinseite ist der Filtermediumkörper von einer umlaufenden Dichtung eingefasst. Das Filterelement mit dem Filtermediumkörper ist in einem Filtergehäuse aufgenommen. Zur Fixierung des Filterelementes im Filtergehäuse ist mittig eine Ausnehmung zwischen Roh- und Reinseite in den Filtermediumkörper des Filterelementes eingebracht. In die Ausnehmung ist ein Dämpfungselement eingesetzt, wobei Abstützdome eines Gehäusegrundbauteils und eines Gehäusedeckels des Filtergehäuses an gegenüberliegenden Seiten des Dämpfungselementes anliegen und über das zwischenliegende Dämpfungselement abgestützt sind. Das in die Ausnehmung eingesetzte Dämpfungselement separiert außerdem die Rein- von der Rohseite in strömungsdichter Weise.

In der EP 1 144 083 B1 wird ein Luftfilter für eine Brennkraftmaschine beschrieben, dessen Filterelement einen Filtermediumkörper aufweist, der als Faltenfilter ausgeführt ist. Auch in diesem Fall ist zur Fixierung des Filterelements in einem aufnehmenden Filtergehäuse eine Ausnehmung mittig in den Filtermediumkörper eingebracht, in die Abstützdome an einem Gehäusegrundbauteil und einem Gehäusedeckel einragen. Die Gehäusedome sind über eine Schraube miteinander verbunden.

Gemäß einer Ausführungsvariante der EP 1 144 083 B1 ragt ein gehäuseseitiges Schwert in eine Falte des Filtermediumkörpers bis zum Faltengrund ein und wird mittels einer Schraube, die durch das Material des Filtermediumkörpers geführt ist, mit einem an der gegenüberliegenden Seite der Falte anliegenden Abstützelement verbunden.

Aus der DE 10 2013 011 612 A1 ist ein Filterelement mit zickzackförmig gefaltetem Faltenbalg zum Einbringen in ein Filtergehäuse bekannt, welches eine Halteeinrichtung zum Halten des Filterelements in dem Filtergehäuse und getrennt davon wenigstens ein Abstützelement zum Abstützen des Filterelements im Filtergehäuse aufweist.

In der WO 2013/139992 A1 ist ein Filterelement für einen Luftfilter beschrieben, welches einen Filterbalg, an dem wenigstens ein Abstützelement zum Abstützen des Filterelements gegen ein Filtergehäuse angeordnet ist, aufweist. Das Abstützelement ist an wenigstens einer Kante des Filterbalgs angeordnet und überragt den Filterbalg außen.

Die Gebrauchsmusterschrift DE 201 12 440 U1 offenbart ein Flachfilterelement mit einem gefalteten Filtermedium mit einer umlaufenden Dichtung, dessen Falten mittels einer im Bereich der Faltenspitzen aufgetragenen Raupe fixiert sind, wobei die Raupe aus dem Dichtungsmaterial besteht.

### Offenbarung der Erfindung

Der Erfindung liegt die Aufgabe zugrunde, mit einfachen konstruktiven Maßnahmen ein Filterelement mit möglichst geringen Beeinträchtigungen der Durchströmung und der Reinigungsleistung stabil in einem Filtergehäuse aufzunehmen.

Diese Aufgabe wird erfindungsgemäß mit den Merkmalen des Anspruches 1 gelöst. Die Unteransprüche geben zweckmäßige Weiterbildungen an.

Das erfindungsgemäße Filterelement wird bevorzugt zur Gasfiltration eingesetzt, beispielsweise zur Filtration der Verbrennungsluft, die einer Brennkraftmaschine zuzuführen ist. Es kommt aber auch eine Anwendung zur Flüssigkeitsfiltration in Betracht.

Das Filterelement weist einen Filtermediumkörper auf, der von dem zu reinigenden Fluid zwischen Anström- und Abströmseite durchströmt wird. Der Filtermediumkörper ist vorzugsweise platten- oder quaderförmig ausgeführt und weist ebene Anström- und Abströmseiten auf, die bevorzugt parallel zueinander liegen. Als Filtermittel für den Filtermediumkörper wird beispielsweise ein Werkstoff auf Papier- bzw. Zellulosebasis verwendet. Der Filtermediumkörper ist bevorzugt als ein Faltenfilter ausgeführt und weist parallel verlaufende Filterfalten auf, wobei die Faltenspitzen jeweils an der Anström- und der Abströmseite liegen, so dass die Faltenebene annähernd in einem rechten Winkel zur Ebene der Anström- und/oder Abströmseite des Filtermediumkörpers verläuft. Anstelle einer Ausführung des Filtermediumkörpers als ein Faltenfilter kommen auch Ausführungen aus einem blockartigen, kompakten Material in Betracht.

Zur Abstützung des Filterelements in einem aufnehmenden Filtergehäuse ist der Filtermediumkörper mit einem Abstützelement versehen, das sich auf der Rein- bzw. Abströmseite des Filtermediumkörpers befindet und nur eine Teilfläche der Reinseite abdeckt, vorzugsweise weniger als 10 %. Das Abstützelement ist mit dem Filtermediumkörper verbunden, insbesondere fest oder unlösbar verbunden, wobei gegebenenfalls auch eine lösbare Verbindung in Betracht kommt. Das Abstützelement bildet einen Teil des Filterelementes, so dass das Filterelement mit dem Filtermediumkörper und dem Abstützelement eine zusammenhängende Baueinheit bildet. Das Abstützelement befindet sich nur auf der Rein- bzw. Abströmseite des Filtermediumkörpers, es ist von der Roh- bzw. Anströmseite über das Material des Filtermediumkörpers separiert. Es kommen sowohl runde als auch nicht-runde Querschnitte des Abstützelements in Betracht, beispielsweise längliche Querschnitte.

Diese Ausführung weist verschiedene Vorteile auf. Für die Abstützung des Filterelementes im aufnehmenden Filtergehäuse ist es nicht erforderlich, eine durchgehende Ausnehmung zwischen Roh- und Reinseite in den Filtermediumkörper einzubringen. Dementsprechend weist der Filtermediumkörper des erfindungsgemäßen Filterelementes keine durchgehende Ausnehmung zwischen Roh- und Reinseite auf, wodurch zum einen die Filtrationsfläche erhöht ist und zum anderen eine Beeinträchtigung der Strömungsverhältnisse durch eine derartige Ausnehmung vermieden wird. Darüber hinaus sind keine zusätzlichen Maßnahmen zur Separierung der Roh- von der Reinseite und der Verhinderung von Fehlluftströmen über eine derartige Ausnehmung erforderlich. Insgesamt verbessert sich die Filtration und verringert sich der Aufwand bei der Herstellung des Filterelements.

Die Abstützung des Filterelements im Filtergehäuse über die Reinseite des Filtermediumkörpers sorgt über einen langen Betriebszeitraum und unter unterschiedlichen Betriebsbedingungen für Stabilität. Es ist insbesondere sichergestellt, dass auch bei einem feuchten Filterelement das Material des Filtermediumkörpers sich nicht unter dem Druck des durchströmenden Fluids zur Reinseite hin auswölbt. Über die Abstützung an der Reinseite wird eine derartige Auswölbung trotz der auf den Filtermediumkörper wirkenden Kräfte des durchströmenden Fluids verhindert.

Die Rohseite und die Reinseite des Filtermediumkörpers sind vorzugsweise jeweils geradflächig ausgebildet. In einer alternativen Ausführung ist entweder eine der Seiten oder sind beide Seiten gekrümmt ausgebildet.

Gemäß einer weiteren zweckmäßigen Ausführung liegt zumindest ein Teil des Abstützelementes auf der reinseitigen Außenfläche des Filtermediumkörpers auf. Das Abstützelement ragt somit über die Reinseite des Filtermediumkörpers hinaus, was eine Abstützung unmittelbar an dem Abstützelement erleichtert und die Gefahr reduziert, dass ein Gegenabstützelement am aufnehmenden Filtergehäuse versehentlich unmittelbar in Kontakt mit dem Filtermediumkörper gelangt. In einer alternativen Ausführung kann es aber zweckmäßig sein, dass das Abstützelement sich nicht über die Reinseite des Filtermediumkörpers erhebt, sondern vollständig in den Filtermediumkörper integriert ist.

Das Abstützelement erstreckt sich in der Ausführung des Filtermediumkörpers als Faltenfilter über zumindest zwei benachbarte Falten, wodurch die Relativposition der Falten zueinander stabilisiert wird. Es kann zweckmäßig sein, dass sich das Abstützelement über mehrere benachbarte Falten erstreckt, beispielsweise über drei, vier, fünf oder mehr Falten, so dass diese Falten entsprechend von dem Abstützelement stabilisiert werden.

Als Material für das Abstützelement kommt beispielsweise PUR-Schaum in Betracht, der in einem flüssigen Zustand auf die Reinseite des Filtermediumkörpers aufgebracht wird. Ist der Filtermediumkörper als Faltenfilter ausgebildet, kann der PUR-Schaum teilweise in den Zwischenraum zwischen benachbarten Falten eindringen, außerdem übergreift das Material des Abstützelementes die Faltenspitzen an der Reinseite des Filtermediumkörpers. Insgesamt wird hierdurch eine stabile und feste Verbindung zwischen dem Material des Abstützelementes und den Falten des Filtermediumkörpers erreicht. Das Material des Abstützelementes erstreckt sich vorteilhafterweise nur über eine Teilhöhe des Filtermediumkörpers, so dass das Abstützelement auf Abstand zum Faltengrund liegt.

Gemäß einer weiteren zweckmäßigen Ausführung weist das Filterelement eine umlaufende Dichtung am Filtermediumkörper auf, um im eingebauten Zustand die Reinseite von der Rohseite strömungsdicht zu separieren. Die Dichtung befindet sich vorteilhafterweise im Bereich der Reinseite des Filtermediumkörpers. Es kann zweckmäßig sein, die Dichtung und das Abstützelement an der Reinseite des Filtermediumkörpers aus dem gleichen Material zu fertigen, beispielsweise aus einem PUR-Schaum. Das Abstützelement befindet sich vorteilhafterweise mit Abstand zur Dichtung an der Reinseite des Filtermediumkörpers.

Die Filtereinrichtung, die das Filterelement aufweist, umfasst ein Filtergehäuse, in das das Filterelement eingesetzt werden kann und das auch die Strömungsführung des zu reinigenden Fluids übernimmt. An einem Gehäusebauteil des Filtergehäuses befindet sich ein Gegenabstützelement, das dem Abstützelement am Filtermediumkörper zugeordnet ist. Der Querschnitt des Gegenabstützelements ist vorteilhafterweise an den Querschnitt des Abstützelements angepasst.

Das Gegenabstützelement am Filtergehäuse und das Abstützelement am Filterelement können im eingebauten Zustand des Filterelements entweder permanent in Kontakt stehen oder, in alternativer Ausführung, zueinander einen kleinen Abstand aufweisen, der nur bei einer Verformung des Filtermediumkörpers überbrückt und auf null reduziert wird, woraufhin das Abstützelement in Anlage mit dem Gegenabstützelement gelangt. Die letztgenannte Ausführung hat den Vorteil, dass keine Schwingungen und Vibrationen zwischen dem Filtergehäuse und dem Filterelement über Abstützelement und das Gegenabstützelement übertragen werden.

Das Gegenabstützelement befindet sich vorteilhafterweise an der Innenseite eines Gehäusebauteils und ist vorzugsweise einteilig mit dem Gehäusebauteil ausgebildet. Als alternative Ausführung ist das Gegenabstützelement separat von dem Gehäusebauteil ausgebildet, jedoch mit dem Gehäusebauteil verbunden, beispielsweise mittels Anclipsen. Bei einteiliger Ausführung ist das Gehäusebauteil bevorzugt als Kunststoff-Spritzgussbauteil ausgebildet und ist das Gegenabstützelement an das Gehäusebauteil angespritzt.

Bei dem Gehäusebauteil, welches Träger des Gegenabstützelementes ist, handelt es sich beispielsweise um einen Gehäusedeckel, der auf einen Gehäusegrundkörper des Filtergehäuses aufsetzbar ist.

Erfindungsgemäß ist das Gegenabstützelement als ein Abstützdom ausgebildet, dessen Stirnseite in der Abstützstellung an der Außenseite des Abstützelementes am Filtermediumkörper anliegt. Das Abstützelement am Filtermediumkörper weist erfindungsgemäß eine konvex nach außen gekrümmte Außenseite auf, um eine kleine Kontaktfläche zwischen Abstützelement und Gegenabstützelement zu gewährleisten und die Reibung, insbesondere quer zur Abstützrichtung zu reduzieren.

An dem Abstützelement am Filtermediumkörper ist ein umlaufender Stützkragen vorgesehen, der einen zentrischen Abschnitt des Abstützelementes umschließt. Der umlaufende Stützkragen dient als Stützfläche, wobei das zugeordnete Gegenabstützelement an dem Gehäusebauteil als beispielsweise zylindrischer oder konischer Hohlkörper ausgebildet ist, dessen Stirnseite in der Abstützposition an dem umlaufenden Stützkragen anliegt. Der zentrische Abschnitt des Abstützelementes innerhalb des Stützkragens, der eine konvex nach außen gekrümmte, beispielsweise teilkugelförmige Seite aufweist, ragt in den Innenraum des Gegenabstützelementes ein und bewirkt eine Zentrierung zwischen dem Abstützelement und dem Gegenabstützelement.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Ansicht eines Filterelements zur Gasfiltration, mit einem an der Reinseite mittig angeordneten Abstützelement,
- Fig. 2: eine Filtereinrichtung mit einem Filtergehäuse und darin aufgenommenem Filterelement, wobei an einem Gehäusedeckel ein Abstützdom als Gegenabstützelement angeordnet ist, welches dem Abstützelement auf dem Filterelement zugeordnet ist,
- Fig. 3: einen Schnitt durch die Filtereinrichtung bei geschlossenem Gehäusedeckel,
- Fig. 4: eine perspektivische Ansicht eines Filterelements in einer Ausführungsvariante mit zwei an der Reinseite angeordneten Abstützelementen,
- Fig. 5: eine Filtereinrichtung mit dem Filterelement gemäß Fig. 4, wobei am Gehäusedeckel zwei Abstützdome als Gegenabstützelemente angeordnet sind, die den Abstützelementen auf dem Filterelement zugeordnet sind,
- Fig.6: ein Filterelement in einer weiteren Ausführungsvariante, bei der das Abstützelement auf der Reinseite leisten- bzw. stabförmig ausgebildet ist,
- Fig. 7: eine Filtereinrichtung mit einem Filterelement gemäß Fig. 6 und einem Gegenabstützelement am Gehäusedeckel, das an die Form des Abstützelementes am Filterelement angepasst ist,
- Fig. 8: ein Abstützelement am Filtermediumkörper und ein Gegenabstützelement am Gehäusedeckel gemäß einer nicht erfindungsgemäßen Ausgestaltung in einer Schnittdarstellung, wobei die Stirnseite des Gegenabstützelementes als ebene Fläche ausgebildet ist, die am konvex nach außen gewölbten Abstützelement anliegt,
- Fig. 9: eine weitere Schnittdarstellung durch ein Abstützelement und ein Gegenabstützelement gemäß einer erfindungsgemäßen Ausgestaltung, wobei die Stirnseite des Gegenabstützelementes konkav nach innen gewölbt ist und das Abstützelement aufnimmt.

In den Figuren sind gleiche Bauteile mit gleichen Bezugszeichen versehen.

### Ausführungsform(en) der Erfindung

Die Ausführungsbeispiele beziehen sich auf ein Filterelement und eine Filtereinrichtung zur Gasfiltration, beispielsweise für einen Luftfilter, der im Ansaugtrakt einer Brennkraftmaschine eingesetzt wird und in dem die angesaugte Verbrennungsluft filtriert wird.

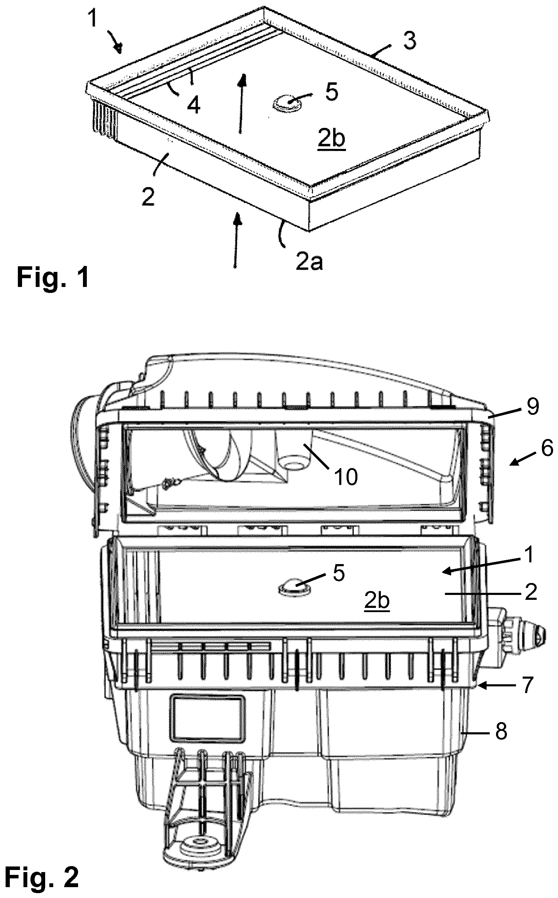

Das in Fig. 1 dargestellte Filterelement 1 wird zur Gasfiltration eingesetzt und umfasst einen quaderförmigen Filtermediumkörper 2 und eine umlaufende Dichtung 3, die im Randbereich des Filtermediumkörpers 2 angeordnet und beispielsweise als PUR-Schaum ausgeführt ist, der auf das Material des Filtermediumkörpers 2 aufgespritzt wird. Der Filtermediumkörper 2 ist als Faltenfilter ausgebildet und weist eine Vielzahl paralleler Filterfalten 4 auf. Die Durchströmung des Filtermediumkörpers 2 mit dem zu reinigenden Gas ist mit den Pfeilen eingetragen. Die Roh- bzw. Anströmseite 2a und die Rein- bzw. Abströmseite 2b des Filtermediumkörpers 2 sind jeweils als Ebene ausgeführt, wobei Roh- und Reinseite aufgrund der quaderförmigen Ausführung des Filtermediumkörpers parallel verlaufen. Die gegenüberliegenden Faltenspitzen der Filterfalten 4 bilden jeweils die Roh- und Reinseite 2a, 2b. Die umlaufende Dichtung 3 befindet sich an der Reinseite 2b und steht über die Ebene der Reinseite 2b axial über, außerdem weist die Dichtung 3 einen Überstand in beide Richtungen quer zur Durchströmungsrichtung gegenüber dem Filtermediumkörper 2 auf.

Mittig an der Reinseite 2b befindet sich ein Abstützelement 5 in Form eines Abstützpads, das bevorzugt ebenso wie die Dichtung aus PUR-Schaum besteht und auf die Reinseite 2b des Filtermediumkörpers aufgespritzt ist. Das Abstützelement 5 befindet sich in der Mitte auf der Reinseite 2b und weist in alle Richtungen zu der umlaufenden Dichtung 3 einen Abstand auf. Durch das Aufbringen des Dichtungsmaterials im flüssigen oder teilflüssigen Zustand kann das Dichtungsmaterial teilweise in die Filterfalten 4 an der Reinseite 2b eindringen und eine feste Verbindung mit dem Filtermediumkörper 2 eingehen. Das als Pad ausgebildete Abstützelement 5 übergreift hierbei eine oder mehrere Kanten von Filterfalten 4. Das Abstützelement 5 weist eine konvex nach außen gekrümmte Außenseite auf und kann gegebenenfalls teilkugelförmig ausgebildet sein.

Fig. 2 zeigt eine Filtereinrichtung 6 mit dem Filterelement 1 in einem Filtergehäuse 7, das sich aus einem Grundgehäuse 8 und einem aufsetzbaren Gehäusedeckel 9 zusammensetzt. Die Rohseite 2a des Filtermediumkörpers 2 liegt in der Darstellung gemäß Fig. 2 unten und die Reinseite 2b oben, so dass das Filterelement 2 von unten nach oben von dem Fluid durchströmt wird.

An der Innenseite des Gehäusedeckels 9 befindet sich ein Gegenabstützelement 10, das dem Abstützelement 5 am Filterelement 1 zugeordnet ist. Das Gegenabstützelement 10 ist als ein Abstützdom ausgebildet, der beispielsweise näherungsweise zylindrisch, gegebenenfalls konisch ausgebildet ist. Mit dem Schließen des Gehäusedeckels 9 gelangt die freie Stirnseite des Gegenabstützelementes 10 in Kontakt mit dem als Pad ausgebildeten Abstützelement 5 an der Rohseite 2b des Filtermediumkörpers 2. Hierdurch wird verhindert, dass der Filtermediumkörper 2 unter dem Druck des durchströmenden Fluids, insbesondere in einem nassen Zustand sich auf der Reinseite 2b nach außen wölbt. Über die Abstützung zwischen dem Abstützelement 5 am Filtermediumkörper 2 und dem Gegenabstützelement 10 an der Innenseite des Gehäusedeckels 9 werden Kräfte, welche bestrebt sind, den Filtermediumkörper 2 in Richtung der Reinseite nach außen zu wölben, über das Gegenabstützelement 10 in den Gehäusedeckel 9 eingeleitet. Auf diese Weise ist gewährleistet, dass der Filtermediumkörper 2 trotz der auf ihn wirkenden Kräfte während der Filtration des Fluids seine Sollposition beibehält und insbesondere sowohl die Rohseite als auch die Reinseite des Filtermediumkörpers 2 zumindest annähernd eben bleiben.

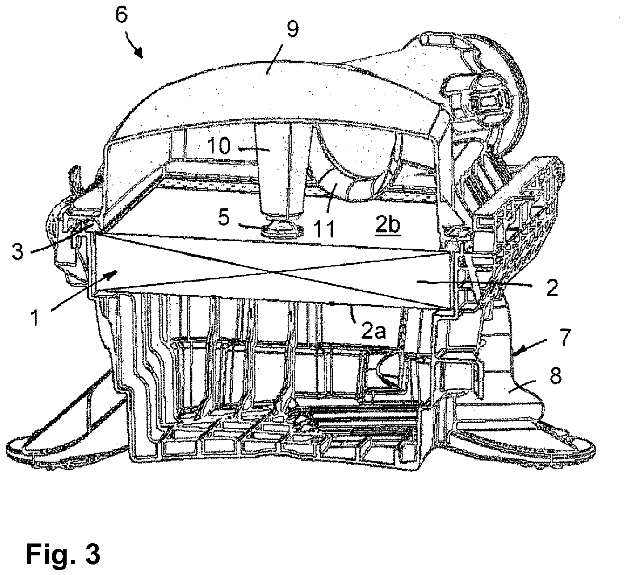

In der Schnittdarstellung gemäß Fig. 3 ist der Gehäusedeckel 9 geschlossen, das Gegenabstützelement 10 liegt mit seiner freien Stirnseite auf dem Abstützelement 5 am Filtermediumkörper 2 auf. Aufgrund der konvex nach außen gekrümmten Außenseite des Abstützelementes 5 gibt es nur eine kleine Kontaktfläche zwischen Abstützelement 5 und Gegenabstützelement 10, so dass beispielsweise aufgrund von Vibrationen eine Relativbewegung zwischen Abstützelement 5 und Gegenabstützelement 10 quer zur Durchströmungsrichtung möglich ist. Zugleich bleibt aber die Abstützung in Durchströmungsrichtung zwischen Abstützelement 5 und Gegenabstützelement 10 bestehen. Die kleine Kontaktfläche verringert die Reibung zwischen den Bauteilen 5 und 10, so dass die Relativbewegung quer zur Durchströmungsrichtung ohne Verspannungen zwischen den Abstützelementen 5 und 10 möglich ist.

Zur erkennen ist in Fig. 3 ein Abströmrohr 11 auf der Reinseite des Filterelementes 1, über das das gereinigte Fluid abgeleitet wird. Das Abströmrohr 11 befindet sich im Seitenbereich des Gehäusedeckels 9 und ist einteilig mit dem Gehäusedeckel 9 ausgebildet. Die Abströmung des gereinigten Fluids auf der Reinseite des Filterelementes 1 erfolgt dementsprechend quer zur Durchströmungsrichtung. Auch das Einleiten des gereinigten Fluids zur Rohseite 2a des Filtermediumkörpers 2 kann gegebenenfalls über ein quer zur Durchströmungsrichtung einmündendes Einströmrohr erfolgen, das einteilig mit dem Grundgehäuse 8 ausgebildet sein kann.

Das Material des Abstützelementes 5 erstreckt sich nur über eine Teilhöhe in die Filterfalten 4 des Filtermediumkörpers 2 hinein. Der Großteil des Materials des Abstützelementes 5 befindet sich an der Außenseite der Reinseite 2b und erhebt sich über die Reinseite 2b. Zwischen den Filterfalten 4 aufgenommenes Material reicht nicht bis zum Grund der Falten an der Rohseite 2a. In jedem Fall ist das Material des Abstützelementes 5 von der Rohseite 2a separiert.

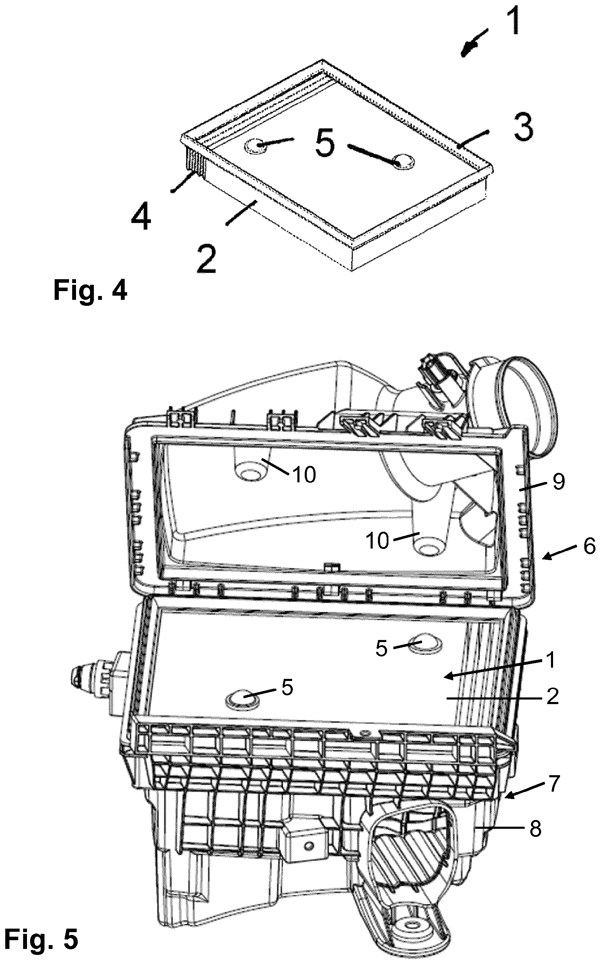

In den Fig. 4 und 5 ist ein weiteres Ausführungsbeispiel mit einem platten- bzw. quaderförmigen Filterelement 1 dargestellt, dessen Filtermediumkörper 2 auf der Reinseite mit zwei Abstützelementen 5 in Form jeweils eines Abstützpads mit rundem Querschnitt versehen ist. Jedes Abstützelement 5 entspricht demjenigen aus dem Ausführungsbeispiel nach Fig. 1, jedoch sind bei Fig. 4 die beiden Abstützelemente 5 außermittig auf der Reinseite des Filtermediumkörpers 2 angeordnet. Jedes Abstützelement 5 ist mit Abstand zur randseitigen, umlaufenden Dichtung 3 angeordnet.

Wie Fig. 5 zu entnehmen, sind an der Innenseite des Gehäusedeckels 9 zwei Gegenabstützelemente 10 in Form jeweils eines Abstützdomes angeordnet, die den beiden Abstützelementen 5 an der Reinseite des Filtermediumkörpers 2 zugeordnet sind. Bei geschlossenem Gehäusedeckel 9 liegt die Stirnseite jedes Gegenabstützelementes 10 an der konvex nach außen gewölbten Außenseite des jeweils zugeordneten Abstützelementes 5 am Filtermediumkörper 2 auf.

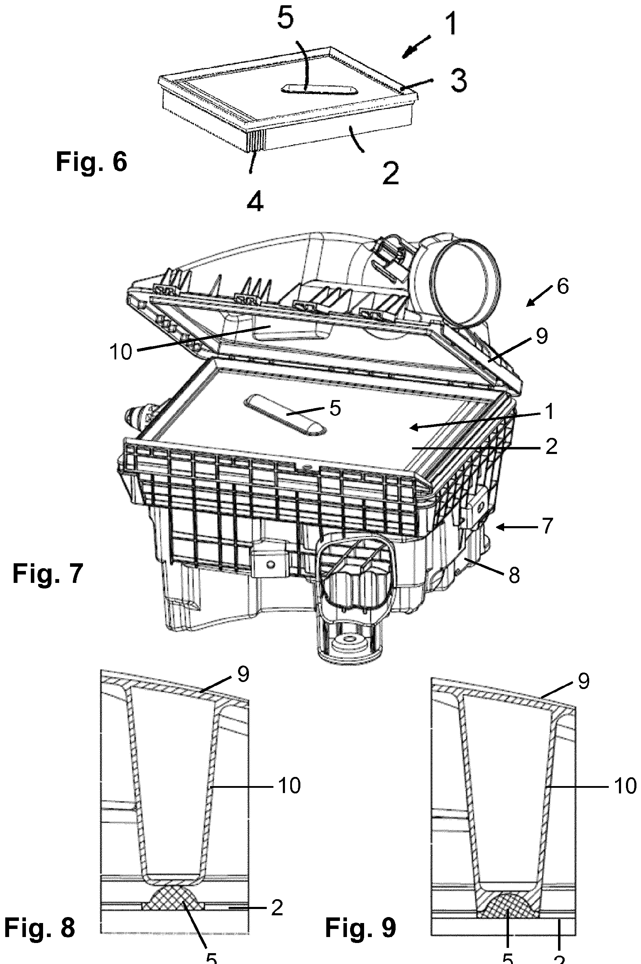

Die Fig. 6 und 7 zeigen ein weiteres Ausführungsbeispiel mit einem Filterelement 1, dessen Filtermediumkörper 2 auf der Reinseite ein längliches Abstützelement 5 trägt, das leisten- bzw. stabförmig ausgebildet ist. Der Aufbau des Abstützelementes 5 entspricht demjenigen aus den vorangegangenen Ausführungsbeispielen. Das längliche Abstützelement 5 liegt schräg auf der Reinseite des Filtermediumkörpers 2, die Längsachse des Abstützelementes 5 verläuft nicht-parallel sowohl zur Längsseite als auch zur Schmalseite des quaderförmigen Filtermediumkörpers 2. Das Abstützelement 5 ist mit Abstand zur randseitig umlaufenden Dichtung 4 angeordnet.

Das Gegenabstützelement 10 an der Innenseite des Gehäusedeckels 9 ist an die Form des Abstützelementes 5 angepasst und besitzt ebenfalls einen länglichen Querschnitt.

In Fig. 8 ist ein Schnitt durch das Abstützelement 5 am Filtermediumkörper 2 und das Gegenabstützelement 10 an der Innenseite des Gehäusedeckels 9 dargestellt. Das padförmige Abstützelement 5 und das als Abstützdom ausgebildete Gegenabstützelement 10 liegen auf Kontakt. Die Stirnseite des Gegenabstützelementes 10 ist als ebene Fläche ausgebildet, die auf der konvex nach außen gekrümmten Außenseite des Abstützelementes 5 am Filtermediumkörper 2 aufliegt. Aufgrund der konvex gekrümmten Außenseite besteht nur eine kleine Kontaktfläche zwischen Abstützelement 5 und Gegenabstützelement 10, wodurch die Reibung verringert wird und Relativbewegungen zwischen den Bauteilen in Querrichtung mit entsprechend reduzierten Reibungskräften verbunden sind. Diese Ausgestaltung des Gegenabstützelements ist von den Ansprüchen nicht umfasst.

Fig. 9 zeigt eine erfindungsgemäße Ausführungsform des Kontaktes zwischen Abstützelement 5 und Gegenabstützelement 10. Die Stirnseite des Gegenabstützelementes 10, das als Abstützdom ausgeführt ist, ist konkav nach innen geformt und an die Kontur des konvex nach außen gewölbten Abstützelementes 5 angepasst. Bei geschlossenem Gehäusedeckel 9 übergreift die konkave Ausnehmung an der Stirnseite des Gegenabstützelementes 10 die konvex nach außen gewölbte Außenseite des Abstützelementes 5. Der stirnseitige Randbereich des Gegenabstützelementes 10 liegt an einem umlaufenden Stützkragen des Abstützelementes 5 auf, der den zentrischen, konvex nach außen gewölbten Abschnitt des Abstützelementes 5 umschließt.

## Patentansprüche

1. Filterelement, insbesondere zur Gasfiltration, beispielsweise für einen Luftfilter, mit einem Filtermediumkörper (2), **dadurch gekennzeichnet, dass** zur Abstützung des Filterelements (1) in einem aufnehmenden Filtergehäuse (7) ein Abstützelement (5) mit dem Filtermediumkörper (2) verbunden ist, das sich auf der Reinseite des Filtermediumkörpers (2) befindet, wobei das Abstützelement (5) von der Rohseite (2a) über das Material des Filtermediumkörpers (2) separiert ist, wobei das Abstützelement (5) am Filtermediumkörper (2) eine konvex nach außen gekrümmte Außenseite zur Aufnahme in einer konkav nach innen gewölbten Stirnseite eines Gegenabstützelements (10) am Filtergehäuse (7) aufweist und wobei das Abstützelement (5) am Filtermediumkörper (2) einen umlaufenden Stützkragen zur Anlage an einem stirnseitigen Randbereich des Gegenabstützelements (10) aufweist, der einen zentrischen Abschnitt des Abstützelements (5) umschließt.

2. Filterelement nach Anspruch 1, **dadurch gekennzeichnet, dass** zumindest ein Teil des Abstützelements (5) auf der reinseitigen Außenfläche des Filtermediumkörpers (2) aufliegt.

3. Filterelement nach Anspruch 1 oder 2, **dadurch gekennzeichnet, dass** das Abstützelement (5) mit Abstand zum Seitenrand an der Reinseite (2b) des Filtermediumkörpers (2) angeordnet ist.

4. Filterelement nach einem der Ansprüche 1 bis 3, **dadurch gekennzeichnet, dass** der Filtermediumkörper (2) als Faltenfilter ausgebildet ist, wobei das Abstützelement (5) sich über mindestens zwei benachbarte Falten erstreckt.

5. Filterelement nach Anspruch 4, **dadurch gekennzeichnet, dass** das Abstützelement (5) in den Faltenzwischenraum einragt, jedoch mit Abstand zum Faltengrund angeordnet ist.

6. Filterelement nach einem der Ansprüche 1 bis 5, **dadurch gekennzeichnet, dass** das Abstützelement (5) aus PUR-Schaum gebildet ist.

7. Filterelement nach einem der Ansprüche 1 bis 6, **dadurch gekennzeichnet, dass** an der Reinseite (2b) des Filtermediumkörpers (2) eine umlaufende Dichtung (3) angeordnet ist.

8. Filtereinrichtung, insbesondere Gasfilter, mit einem Filterelement (1) nach einem der Ansprüche 1 bis 7 und mit einem Filtergehäuse (7) zur Aufnahme des Filterelements (1), wobei am Filtergehäuse (7) ein dem Abstützelement (5) am Filtermediumkörper (2) zugeordnetes Gegenabstützelement (10) angeordnet ist, wobei das Gegenabstützelement (10) als ein Abstützdom ausgebildet ist, dessen Stirnseite in Abstützstellung an der Außenseite des Abstützelements (5) am Filtermediumkörper (2) anliegt, wobei die Stirnseite des Gegenabstützelements (10) eine konkav nach innen gewölbte Kontur zur Aufnahme des konvexen Abschnitts des Abstützelements (5) und einen Randbereich zur Anlage an dem umlaufenden Stützkragen des Abstützelements (5) aufweist.

9. Filtereinrichtung nach Anspruch 8, **dadurch gekennzeichnet, dass** das Gegenabstützelement (10) an der Innenseite eines Gehäusebauteils (9) angeordnet und insbesondere einteilig mit dem Gehäusebauteil (9) ausgebildet ist.

## Claims

1. Filter element, in particular for gas filtration, for example for an air filter, having a filter medium body (2), **characterized in that,** for supporting the filter element (1) in a receiving filter housing (7), a supporting element (5) is connected to the filter medium body (2) which is located on the clean side of the filter medium body (2), wherein the supporting element (5) is separated from the raw side (2a) via the material of the filter medium body (2), wherein the supporting element (5) on the filter medium body (2) features a convexly outwardly curved exterior side for being received in a concavely inwardly curved end face of a counter-supporting element (10) on the filter housing (7) and wherein the supporting element (5) on the filter medium body (2) features a circumferential support collar, which surrounds a central section of the supporting element (5), for abutment against a frontal edge area of the counter-supporting element (10).

2. Filter element according to claim 1, **characterized in that** at least one part of the supporting element (5) rests on the clean-side outer surface of the filter medium body (2).

3. Filter element according to claim 1 or 2, **characterized in that** the supporting element (5) is disposed at a distance from the lateral edge on the clean side (2b) of the filter medium body (2).

4. Filter element according to one of the claims 1 to 3, **characterized in that** the filter medium body (2) is designed as folded filter, wherein the supporting element (5) extends across at least two adjacent folds.

5. Filter element according to claim 4, **characterized in that** the supporting element (5) projects into the intermediate fold space, however disposed at a distance from the fold base.

6. Filter element according to one of the claims 1 to 5, **characterized in that** the supporting element (5) is made of PUR foam.

7. Filter element according to one of the claims 1 to 6, **characterized in that** a circumferential seal (3) is disposed on the clean side (2b) of the filter medium body (2).

8. Filtering device, in particular gas filter, having a filter element (1) according to one of the claims 1 to 7 and having a filter housing (7) for receiving the filter element (1), wherein a counter-supporting element (10) associated with the supporting element (5) on the filter medium body (2) is disposed on the filter housing (7), wherein the counter-supporting element (10) is designed as a support dome, the end face of which, in the support position, rests against the exterior side of the supporting element (5) on the filter medium body (2), wherein the end face of the counter-supporting element (10) features a concavely inwardly curved contour for receiving the convex section of the supporting element (5) and an edge area for resting against the circumferential support collar of the supporting element (5).

9. Filtering device according to claim 8, **characterized in that** the counter-supporting element (10) is disposed on the interior side of a housing component (9) and formed in particular in one piece with the housing component (9).

## Revendications

1. Élément filtrant, notamment pour la filtration des gaz, par exemple pour un filtre à air, avec un corps de milieu filtrant (2), **caractérisé en ce que**, pour soutenir l'élément filtrant (1) dans un boîtier de filtre récepteur (7), un élément de support (5) est relié au corps de milieu filtrant (2), qui se trouve sur le côté pur du corps de milieu filtrant (2), dans lequel l'élément de support (5) est séparé du côté brut (2a) par le matériau du corps de milieu filtrant (2), dans lequel l'élément de support (5) sur le corps de milieu filtrant (2) présente un côté extérieur courbé de manière convexe vers l'extérieur pour la réception dans une surface d'extrémité courbée de manière concave vers l'intérieur d'un élément de contre-support (10) sur le boîtier de filtre (7) et dans lequel l'élément de support (5) sur le corps de milieu filtrant (2) présente un collet d'appui en sens circonférentiel, qui entoure une section centrale de l'élément de support (5), pour la mise en butée contre une zone périphérique frontale de l'élément de contre-support (10).

2. Élément filtrant selon la revendication 1, **caractérisé en ce qu'**au moins une partie de l'élément de support (5) repose sur la surface extérieure, côté pur, du corps de milieu filtrant (2).

3. Élément filtrant selon la revendication 1 ou 2, **caractérisé en ce que** l'élément de support (5) est disposé à distance du bord latéral sur le côté pur (2b) du corps de milieu filtrant (2).

4. Élément filtrant selon l'une des revendications 1 à 3, **caractérisé en ce que** le corps du milieu filtrant (2) est conçu comme un filtre à plis, dans lequel l'élément de support (5) s'étend sur au moins deux plis adjacents.

5. Élément filtrant selon la revendication 4, **caractérisé en ce que** l'élément de support (5) fait saillie dans l'interstice de pliage, mais est disposé à une certaine distance du creux de plis.

6. Élément filtrant selon l'une des revendications 1 à 5, **caractérisé en ce que** l'élément de support (5) est formé de mousse PUR.

7. Élément filtrant selon l'une des revendications 1 à 6, **caractérisé en ce qu'**un joint d'étanchéité périphérique (3) est disposé sur le côté pur (2b) du corps du milieu filtrant (2).

8. Dispositif de filtration, notamment filtre à gaz, avec un élément filtrant (1) selon l'une des revendications 1 à 7 et avec un boîtier de filtre (7) pour recevoir l'élément filtrant (1), dans lequel un élément de contre-support(10) affecté à l'élément de support (5) sur le corps de milieu filtrant (2) est disposé sur le boîtier de filtre (7), dans lequel l'élément de contre-support (10) est réalisé sous forme de dôme de support, dont la face frontale s'appuie, en position d'appui, contre la face extérieure de l'élément de support (5) sur le corps (2) du milieu filtrant, dans lequel la face frontale de l'élément de contre-support (10) présente un contour incurvé de manière concave vers l'intérieur pour recevoir la section convexe de l'élément de support (5) et une zone périphérique pour s'appuyer contre le collet d'appui périphérique de l'élément de support (5).

9. Dispositif de filtration selon la revendication 8, **caractérisé en ce que** l'élément de contre-support (10) est disposé à l'intérieur d'un composant de boîtier (9) et est notamment formé d'une seule pièce avec le composant de boîtier (9).
